(19) Europäisches Patentamt
European Patent Office
Office européen des brevets

(11) Veröffentlichungsnummer: **0 302 196 B1**

# (12) EUROPÄISCHE PATENTSCHRIFT

(45) Veröffentlichungstag der Patentschrift: **04.12.91**

(51) Int. Cl.5: **C08F 297/04**, B60C 1/00

(21) Anmeldenummer: **88108974.2**

(22) Anmeldetag: **04.06.88**

## (54) AB-Blockcopolymerisate auf Basis von Butadien, Isopren und Styrol, Verfahren zu ihrer Herstellung und ihre Verwendung.

(30) Priorität: **28.07.87 DE 3724871**

(43) Veröffentlichungstag der Anmeldung:
**08.02.89 Patentblatt 89/06**

(45) Bekanntmachung des Hinweises auf die Patenterteilung:
**04.12.91 Patentblatt 91/49**

(84) Benannte Vertragsstaaten:
**AT BE CH DE ES FR GB IT LI LU NL SE**

(56) Entgegenhaltungen:
**EP-A- 0 173 791**
**EP-A- 0 262 232**
**FR-A- 1 574 421**
**US-A- 4 616 065**

(73) Patentinhaber: **HÜLS AKTIENGESELLSCHAFT**
**Patentabteilung / PB 15 - Postfach 13 20**
**W-4370 Marl 1(DE)**

(72) Erfinder: **Herrmann, Christoph, Dr.**
**Siedlungsstrasse 3**
**W-4370 Marl(DE)**
Erfinder: **Hellermann, Walter, Dr.**
**Waldstrasse 16**
**W-4270 Dorsten 21(DE)**
Erfinder: **Fuchs, Hans-Bernd, Dr.**
**Leverkusener Strasse 12**
**W-4370 Marl(DE)**
Erfinder: **Nordsiek, Karl-Heinz, Dr.**
**Neumarkstrasse 4**
**W-4370 Marl(DE)**
Erfinder: **Wolpers, Jürgen, Dr.**
**Hetfeld 15 c**
**W-4358 Haltern(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 302 196 B1

## Beschreibung

Die Erfindung betrifft ungesättigte elastomere AB-Blockcopolymerisate auf Basis von Butadien, Isopren und Styrol, ihre Herstellung und ihre Verwendung zur Herstellung von Reifenlaufflächen.

Bekanntlich werden an Kautschuke, die im Reifensektor eingesetzt werden, folgende Anforderungen gestellt:

- Der kalte Fluß soll möglichst gering sein.
- Die Kautschuke sollen bei den sich anschließenden Mischprozessen gut verarbeitbar sein.
- Die Kautschuke sollen bei den Verformungsprozessen fließfähig sein.
- Die Kautschuke sollen gut vulkanisierbar sein.

Darüber hinaus sind die Forderungen zu berücksichtigen, die sich aus ihrem Einsatzgebiet im Reifensektor ergeben. Bekanntlicherweise werden an Reifenlaufflächen in jüngster Zeit erhöhte Anforderungen gestellt:

a) Sie sollen auch bei tiefen Temperaturen noch hoch elastisch sein.

b) Sie sollen eine gute Naßrutschfestigkeit aufweisen.

c) Sie sollen einen hohen Abriebwiderstand aufweisen und dementsprechend eine lange Lebensdauer haben.

d) Sie sollen bei dynamischer Beanspruchung möglichst wenig Wärme bilden. Ihr Rollwiderstand soll möglichst klein sein, damit der Treibstoffverbrauch des Fahrzeugs möglichst niedrig ist.

Es ist bekannt, daß Kautschuke bei der Prüfung im Torsionsschwingungsversuch eine Temperaturabhängigkeit des logarithmischen Dekrementes der mechanischen Dämpfung und daraus abgeleitet eine Temperaturabhängigkeit des mechanischen Verlustfaktors tan delta aufweisen, die in der graphischen Darstellung einem für den jeweiligen Kautschuk charakteristischen Kurvenverlauf entspricht. Die gewünschten Anforderungen an die Reifenlaufflächen stellen sich vorzugsweise dann ein, wenn die tan delta-Kurve einen möglichst breiten Schwingungsdämpfungsbereich aufweist (vgl. K. H. Nordsiek, Kautschuk und Gummi, Kunststoffe 38, 178 (1985) und 39, 599 (1986).

Es ist auch bekannt, daß diese sich teilweise widersprechenden Eigenschaften der Reifenlaufflächen ganz wesentlich durch die Art und Zusammensetzung der zu diesem Zweck eingesetzten Kautschuke bestimmt werden. Homopolymere auf Basis der üblicherweise eingesetzten monomeren Rohstoffe wie Butadien, Isopren und Styrol erfüllen diese Bedingungen noch nicht befriedigend (vgl. EP-A-0 054 204 und JP-A-82/87 406).

Verschnitte von Kautschuksorten weisen in der Praxis den Nachteil auf, daß das aufgeführte Eigenschaftsspektrum nicht erreicht und die gewünschte reifentechnische Qualität nicht zuverlässig reproduziert wird. Es besteht daher ein Bedarf an Kautschuken, die den oben genannten Eigenschaftsvorstellungen möglichst weit entgegen kommen. Dieses Ziel sollte sich grundsätzlich mit Kautschuken erreichen lassen, die aus Polymeren mit unterschiedlichen Blöcken bestehen.

Als Blöcke eines Polymeren sollen im Rahmen dieser Erfindung nicht nur die Kettensegmente angesehen werden, die aus unterschiedlichen Monomerbausteinen bestehen, sondern auch jene Segmente, die sich - bedingt durch die äußeren Verfahrensparameter - in der Art der Verknüpfung der Monomerbausteine oder in dem Anteil, in dem sie in ein Kettensegment eingebaut sind, sprunghaft unterscheiden.

Das Butadien-Isopren-Copolymer, das in der EP-A-0 054 204 beschrieben wird, weist zwar in seinem Anfangs- und Endteil einen unterschiedlichen Gehalt an Isopren auf, der auf die geringere Polymerisationsneigung von Isopren im Vergleich zu Butadien zurückzuführen ist, ist aber in dem soeben erläuterten Sinne nicht als Blockcopolymer anzusprechen.

Auch wenn man während der Copolymerisation von Dienen und Styrol den Styrolanteil verändert (vgl. DE-A-31 08 583), erhält man kein Blockcopolymer, sondern fließende Übergänge. Die gewünschte Verbesserung der reifentechnischen Eigenschaften ist auch hier noch unzureichend. Die DE-A-31 08 583 beschreibt 1-phasige Kautschuksysteme mit einem Dämpfungsmaximum, das von einem Glasübergangspunkt in einem sehr engen Temperaturbereich verursacht wird.

Eine Verbesserung wird erst dadurch erreicht, daß man ein Copolymer aus zwei unterschiedlichen Blöcken A und B herstellt, die sich in ihrer Struktur und/oder Zusammensetzung unterscheiden.

So beschreibt z. B. die DE-A-31 51 139 ein statistisches Styrol-Butadien-Blockcopolymer. Die Blöcke unterscheiden sich in ihrem Butadiengehalt und dem Gehalt an Vinylbindungen. Sie sind so miteinander vermischt, daß sie verträglich sind und daß anstelle von 2 getrennten lediglich eine einzige Dämpfungsspitze entsteht.

In der DE-A-35 30 438 werden Kautschukmassen beansprucht, die mindestens 20 % eines Styrol-Butadien-Blockcopolymeren enthalten. Die Blöcke unterscheiden sich im Styrolgehalt, im Gehalt an Vinylbindungen und - daraus folgend - in der Glasübergangstemperatur. Die tan delta-Kurve weist auch in diesem

Falle lediglich einen schmalen Temperaturbereich maximaler Dämpfung auf.

Die japanische Offenlegungsschrift 83/122 907 beschreibt verzweigte Kautschuke, die durch Umsetzung einer z. B. metallischen Tetrahalogenverbindung, wie $SnCl_4$, mit Blockcopolymeren, bestehend aus einem Polyisopren- und einem Polybutadienblock, erhältlich sind. Jeder der beiden Blöcke besteht also aus einem Homopolymeren. Der nach Umsetzung mit dem metallischen Kupplungsmittel erhaltene sternförmige Kautschuk bildet ein 1-phasiges Kautschuksystem mit einem Glasübergangspunkt aus.

Die GB-B-2 090 840 beschreibt Blockcopolymere, die durch Polymerisation von Dienen bzw. Copolymerisation von Diengemischen erhalten werden und deren Blöcke sich im Gehalt an 1,2- und/oder 3,4-Struktureinheiten um 20 bis 50 Mol-% unterscheiden. Die Herstellung solcher Blockcopolymere erfolgt in Gegenwart unterschiedlicher Mengen an Cokatalysator oder bei unterschiedlichen Temperaturen.

Die EP-A-0 173 791 beschreibt Laufstreifen, deren Kautschukkomponente zu 30 bis 100 % aus Blockcopolyerisaten auf Basis von Butadien, Isopren und gegebenenfalls Styrol und/oder Piperylen bestehen kann. Die Blockcopolymerisate werden in Gegenwart von Cokatalysatoren unter Erhöhung der Temperatur hergestellt und können beispielsweise AB-Struktur aufweisen. Die Polymerisate enthalten stets einen Endblock auf Basis von Butadien, der bei steigender Temperatur hergestellt wird und infolgedessen einen vergleichsweise hohen Anteil an 1,2-Struktureinheiten und eine ungleichmäßige Verteilung der Vinylgruppen aufweist. Auch diese Blockcopolymerisate ergeben noch nicht tan delta-Kurven mit einem hinreichend breiten Plateau, um alle Reifeneigenschaften optimal zu erfüllen (siehe Vergleichsversuch A). Daher wird bereits in dieser Schrift vorgeschlagen, die erhaltenen Blockcopolymerisate mit anderen Kautschukkomponenten zu verschneiden (siehe Anspruch 1 und Beispiel 2).

Allen aufgeführten Blockcopolymeren haftet mindestens einer der folgenden Mängel an:

1. Die Blockcopolymeren werden den oben genannten Anforderungen im Hinblick auf ihre Verwendung als Reifenmaterial nicht befriedigend gerecht.
2. Es treten Probleme in der Verträglichkeit der beiden Blöcke auf.
3. Die tan delta-Kurve weist nur ein schmales Dämpfungsmaximum auf.
4. Es werden große Mengen des vergleichsweise teuren Isoprens benötigt.

Ziel der vorliegenden Erfindung war es, AB-Blockcopolymerisate auf Basis von Isopren, Butadien und Styrol zu entwickeln, die eine tan-delta-Kurve mit so breitem Schwingungsdämpfungsbereich aufweisen, daß eine Zumischung von weiteren Kautschukkomponenten zur Erweiterung des Schwingungsdämpfungsbereichs nicht mehr erforderlich ist. Vorzugsweise sollte dieser Schwingungsdämpfungsbereich zwischen -90 °C und + 30 °C liegen.

Es wurden jetzt überraschend AB-Blockcopolymerisate auf Basis von 45 bis 85 % Butadien, 5 bis 40 % Isopren und bis 30 % Styrol gefunden. Diese bestehen aus

40 bis 80 % eines Blockes A, der Butadieneinheiten mit einem Gehalt an gleichmäßig verteilten Vinylgruppen von 8 bis 60 % enthält,

60 bis 20 % eines Blockes B, der

- 0 - 60 % Butadien-1,3,
- mindestens 10 % Isopren und
- 5 bis 45 % Styrol

enthält, wobei die Dieneinheiten einen Vinylgehalt von 75 bis 90 % aufweisen.

Vorzugsweise enthält das AB-Blockcopolymerisat

50 bis 75 % Butadien-1,3,
10 bis 35 % Isopren und
5 bis 25 % Styrol.

Im folgenden soll der Block A näher beschrieben werden. Die Vinylgruppen können entweder statistisch oder entlang der Kette mit zu- bzw. abnehmendem Gradienten verteilt sein. Der Anteil der Vinylgruppen beträgt vorzugsweise 10 bis 50 %. Bis zu 25 % der Butadieneinheiten des Blockes A können durch Styroleinheiten ersetzt sein. Bis zu 30 % der Butadieneinheiten des Blockes A können durch Isopreneinheiten mit mindestens 60 % 1,4-Anteil ersetzt sein.

Der Block B besteht vorzugsweise aus

10 bis 60 % Butadien,
10 bis 70 % Isopren und
5 bis 45 % Styrol.

Die AB-Blockcopolymerisate können sowohl linear als auch verzweigt sein. Die Verzweigung kann mit Hilfe eines Verzweigungsmittels während der Polymerisation oder mit Hilfe eines Kupplungsmittels zu Ende der Polymerisation erreicht werden.

Das Verfahren zur Herstellung der Blockcopolymerisate durch anionische Polymerisation der Monomeren in einem inerten organischen Lösemittel in Gegenwart einer Li-organischen Verbindung ist dadurch

gekennzeichnet, daß man zunächst einen Block A durch Polymerisation von Butadien gegebenenfalls in Anwesenheit einer geringen Menge eines Cokatalysators herstellt. Es ist auch möglich, bei der Herstellung des Blockes A bis zu 25 % des Butadiens durch Styrol und bis zu 30 % des Butadiens durch Isopren zu ersetzen. Danach stellt man einen Block B her, indem man ein Gemisch aus Butadien, Isopren und Styrol in Gegenwart eines Cokatalysators polymerisiert.

Grundsätzlich besteht die Möglichkeit, zu Beginn der Polymerisation des Blockes A die für dessen Herstellung benötigten Mengen an Monomeren dem Reaktionsgefäß zuzusetzen. Man kann aber auch bereits zu Beginn der Polymerisation des Blockes A die Gesamtmenge Butadien und ggf. Styrol vorlegen und den Block B durch Zugabe der weiteren Komponenten beginnen. Weitere Einzelheiten des erfindungsgemäßen Verfahrens sind in den Ansprüchen 9 bis 13 festgehalten.

Gegenstand der Erfindung ist schließlich auch die Verwendung der AB-Blockcopolymerisate zur Herstellung von Reifenlaufflächen gemäß Anspruch 14.

Im folgenden soll das Verfahren detailliert beschrieben werden.

Als Reaktionsmedium wird ein inertes organisches Lösemittel verwendet. Geeignet sind insbesondere Kohlenwasserstoffe mit 6 bis 12 C-Atomen wie Pentan, Hexan, Heptan, Oktan und Dekan sowie deren cyclische Analogen. Geeignet sind auch aromatische Lösemittel wie z. B. Benzol, Toluol, Xylole u. a. Selbstverständlich können auch Gemische der vorstehend beschriebenen Lösemittel eingesetzt werden.

Als Katalysator werden Alkyllithiumverbindungen eingesetzt, die durch Umsetzung von Lithium mit den entsprechenden Alkylhalogeniden leicht zugänglich sind. Die Alkylreste weisen 1 bis 10 C-Atome auf. Einzelne Wasserstoffatome können durch Phenylreste substituiert sein. Folgende Alkyllithiumverbindungen sind besonders geeignet: Methyllithium, Ethyllithium, Pentyllithium; bevorzugt wird n-Butyllithium.

Zur Verbesserung des kalten Flusses wird wenigstens eine Polymerisationsstufe vorteilhafterweise in Anwesenheit geringer Mengen eines Verzweigungsmittels, wie z. B. Divinylbenzol (DVB), durchgeführt. Bezogen auf 100 Teile Monomere werden maximal 0,5 Teile DVB eingesetzt. Ein solcher Zusatz entfällt, wenn nach der Polymerisation eine Kupplung vorgesehen ist.

Art und Menge von Katalysator und Verzweigungsmittel werden im allgemeinen so ausgewählt, daß das erhaltene Blockcopolymerisat folgende Eigenschaften aufweist:

Mooney-Viskosität ($ML_{1-4}$, 100 °C, DIN 53 523): 35 bis 120;

Uneinheitlichkeit U = (Mw/Mn) - 1, bestimmt durch gelpermeationschromtografische Analyse (GPC-Analyse): 0,6 bis 3,0;

Defo-Elastizität(80 °C, DIN 53 514): ≧ 20;

Bei dem vorliegenden Verfahren wird der Block B in Anwesenheit eines Cokatalysators hergestellt.

In diesem Falle ist man daran interessiert, Polymerisate mit einem möglichst hohen Anteil von 1,2- und/oder 3,4-Struktureinheiten zu erhalten.

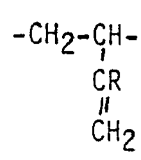

und/oder

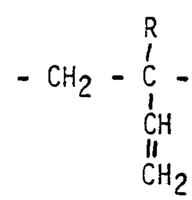

R = H (Butadien)

R = $CH_3$ (Isopren)

Die Auswahl der Cokatalysatoren richtet sich daher nach ihrer Fähigkeit, die Mikrostruktur zu regeln, d. h. den Verlauf der Polymerisation im Hinblick auf eine möglichst vollständige Bildung von 1,2-und/oder 3,4-Struktureinheiten zu lenken.

Der Cokatalysator wird im allgemeinen aus der Gruppe

- der Ether,
- der tertiären Amine oder
- der etherhaltigen tertiären Amine

ausgewählt. Selbstverständlich können auch Gemische verschiedener Cokatalysatoren eingesetzt werden.

Geeignete Ether umfassen insbesondere

- Dialkylether des Ethylenglykols und Diethylenglykols, deren Alkylgruppen jeweils bis zu 4 C-Atome aufweisen, wie Ethylenglykoldiethylether (DEE).

Insbesondere bei der Herstellung von verzweigten Blockcopolymeren werden Ether der allgemeinen

Formel

$R_1 - O - CH_2 - CH_2 - O - R_2$

bevorzugt, wobei $R_1$ und $R_2$ Alkylreste mit einer unterschiedlichen Zahl von C-Atomen aus der Gruppe Methyl, Ethyl, n- und iso-Propyl sowie n-, iso-, sek.- und tert. Butyl sind. Vorzugsweise beträgt die Summe der C-Atome der beiden Reste $R_1$ und $R_2$ 5 bis 7, insbesondere 6. Ein besonders geeigneter Ethylenglykolether ist die Verbindung mit $R_1$ = Ethyl und $R_2$ = tert. Butyl. Die Glykolether sind beispielsweise nach dem Prinzip der Williamson-Synthese aus einem Natriumalkoholat und einem Alkylalogenid zugänglich. Die Ether der Formel

$R_1 - O - CH_2 - CH_2 - O - C(CH_3)_3$

können in einfacher Weise durch Umsetzung des entsprechenden Alkohols

$R_1 - O - CH_2 - CH_2 - OH$

mit Isobuten in Gegenwart eines sauren Ionenaustauschers hergestellt werden.

Geeignete tertiäre Amine sind z. B. N,N,N′,N′-Tetramethylethylendiamin, N,N,N′,N′-Tetraethylethylendiamin und Triethylendiamin.

Geeignete etherhaltige Amine sind N-Methylmorpholin und N-Ethylmorpholin.

Der Cokatalysator wird in einem Verhältnis von 2 : 1 bis 30 : 1, insbesondere 2 : 1 bis 15 : 1, bezogen auf die Molzahl des Katalysators eingesetzt. Bei höheren Temperaturen werden im allgemeinen größere Mengen an Cokatalysator benötigt, um die gewünschte Mikrostrukturregelung zu erzielen. Reaktionstemperaturen von 100 °C sollten nicht überschritten werden. Es ist auch möglich, bei steigender oder fallender Temperatur zu arbeiten; jedoch ist in diesem Falle dafür Sorge zu tragen, daß die Mikrostruktur nicht grundsätzlich verändert wird.

Bei der Herstellung des Blockes A hängt es von dem gewünschten Vinylgruppengehalt ab, wieviel Cokatalysator zugegen sein sollte.

Bei der Herstellung von Block B und gegebenenfalls A wird Styrol als Comonomer zugesetzt. Durch geeignete Maßnahmen ist dafür Sorge zu tragen, daß der Gehalt an Polystyrolblöcken im AB-Blockcopolymerisat 2 Massen-% nicht überschreitet. Ein Verfahren zur Bestimmung des Gehaltes an Polystyrolblöcken ist in dem Standardwerk Houben-Weyl "Methoden der Organischen Chemie", Band 14/1 (1061), Seite 698 angegeben.

Es ist bekannt, daß einige als Cokatalysatoren vorgeschlagene Verbindungen die Eigenschaft haben, die Ausbildung von Polystyrolblöcken zu unterdrücken. Die gleiche Eigenschaft haben Verbindungen, die als Randomizer bezeichnet werden und meist Kaliumsalze von Alkoholaten sowie organischen Carbon- und Sulfonsäuren sind.

Gemäß einer besonderen Ausführungsform des Verfahrens können die nach Abschluß der Polymerisation vorliegenden "lebenden Polymere" mit einem Kupplungsmittel zu verzweigten oder sternförmigen Blockcopolymerisaten umgesetzt werden.

Geeignete Kupplungsmittel sind Polyepoxide wie epoxidiertes Leinsamenöl, Polyisocyanate, Polyketone wie 1,3,6-Hexantrion, Polyanhydride wie beispielsweise das Dianhydrid der Pyromellithsäure und Dicarbonsäureester wie Adipinsäuredimethylester. Besonders geeignet sind

- die Tetrahalogenide der Elemente Si, Ge, Sn und Pb, insbesondere $SiCl_4$.
- organische Verbindungen der allgemeinen Formel $R_n[SiHal_3]_n$, mit n = 1 bis 6, insbesondere n = 1 und 2. Hierbei ist R ein n-wertiger organischer Rest, beispielsweise ein aliphatischer, cycloaliphatischer oder aromatischer Rest mit 6 bis 16 C-Atomen. Beispielhaft seien 1,2,4-Tris(2-trichlorsilylethyl)-cyclohexan, 1,8-Bis(trichlorsilyl)-octan und 1-(Trichlorsilyl)-octan genannt.
- organische Verbindungen, die mindestens einmal die Gruppierung > $SiHal_2$ enthalten, wie z. B. Dimethylsilylchlorid.
- Halogensilanwasserstoffe der allgemeinen Formel $Si(H)_m(Hal)_{4-m}$ mit $3 \geq m \geq 1$.
- Di- und Trivinylbenzole, wie z. B. 1,4-Divinylbenzol.

Es hat sich als zweckmäßig erwiesen, als Kupplungsmittel Divinylbenzol zu verwenden.

Das Verfahren kann sowohl diskontinuierlich wie kontinuierlich betrieben werden.

Mit Hilfe der tan delta-Kurve ist der Fachmann in der Lage, durch Variation der Reaktionsbedingungen Blockcopolymerisate herzustellen, die zu Reifenlaufflächen mit den gewünschten Eigenschaftskombinationen verarbeitet werden können.

Die erhaltenen amorphen Polymerisate werden, wenn sie zu Vulkanisaten verarbeitet werden sollen, mit aktiven, verstärkenden Füllstoffen, einem Vulkanisationsmittel und üblichen Zusatzstoffen gemischt. Im allgemeinen ist es erforderlich, diese Vermischung unter Einwirkung von Scherkräften durchzuführen.

Massen, welche zur Herstellung von Reifenlaufflächen bestimmt sind, werden im allgemeinen zu Rohlaufstreifen geformt. Bei der Homogenisierung und Formgebung, die beispielsweise in einem Extruder erfolgen kann, werden die Bedingungen von Temperatur und Zeit so gewählt, daß keine Vulkanisation eintritt.

Die Kautschukkomponente in den vulkanisierbaren Massen besteht vorzugsweise zu mehr als 70 und insbesondere zu 100 Massen-% aus einem Blockcopolymerisat der Erfindung und zu 0 bis 30 Massen-% aus einem bekannten, amorphen Allzweckkautschuk wie z. B. Styrol-Butadien-Kautschuk, 1,4-cis-Polybutadien, 1,4-cis-Polyisopren und Naturkautschuk. Sofern dies erwünscht sein sollte, kann der Anteil der Allzweckkautschuke auch wesentlich erhöht werden.

Aktive, verstärkende Füllstoffe sind beispielsweise Reifenlaufflächenruße unterschiedlicher Aktivität, gegebenenfalls mit Silan-Haftvermittlern behandelte, hochdisperse Kieselsäuren und ihre Gemische.

Übliche Vulkanisationsmittel enthalten z. B. Schwefel in Kombination mit Beschleunigern. Die Menge des Vulkanisationsmittels richtet sich nach den übrigen Komponenten in der vulkanisierbaren Masse und kann durch einfache, orientierende Versuche ermittelt werden.

Als Zusatzstoff können die in der Kautschuktechnik üblichen Weichmacheröle, bevorzugt aromatische, aliphatische und naphthenische Kohlenwasserstoffe, sowie übliche Hilfsmittel, wie beispielsweise Zinkoxid, Stearinsäue, Harzsäuren, Alterungsschutzmittel und Ozonschutzwachse, in üblichen Mengen zugesetzt werden.

Die erfindungsgemäßen Blockcopolymerisate eignen sich zur Herstellung der Laufflächen von PKW- und LKW-Reifen und zwar sowohl zur Herstellung von Neureifen als auch zur Runderneuerung von Altreifen.

Die Reifenlaufflächen zeichnen sich insbesondere durch folgende vorteilhafte Eigenschaften aus:

- hoher Naßrutschwiderstand
- hoher Abriebwiderstand
- niedriger Rollwiderstand und daher geringer Treibstoffverbrauch
- hohe Verschleißfestigkeit
- Allwettereigenschaften

Als Lösemittel wurde ein Kohlenwasserstoffgemisch eingesetzt, das zu etwa 50 % aus Hexan bestand. Weitere Bestandteile dieses hydrierten $C_6$-Schnittes waren insbesondere Pentan, Heptan und Oktan sowie deren Isomere. Das Lösemitel wurde über einem Molekularsieb der Porenweite 0,4 nm getrocknet, so daß der Wasseranteil unter 10 ppm gesenkt wurde, und anschließend mit $N_2$ gestrippt.

Die organische Lithiumverbindung war n-Butyllithium, die, wenn nicht anders angegeben, in Form einer 20 Gew.-prozentigen Lösung in Hexan zur Anwendung kam.

Die Monomeren Isopren und Styrol wurden vor ihrem Einsatz 24 Stunden über Calciumhydrid unter Rückfluß gekocht, abdestilliert und mit n-Butyllithium in Gegenwart von o-Phenanthrolin austitriert.

Die Glykolether wurden über Calciumhydrid destilliert und anschließend mit n-Butyllithium in Gegenwart von o-Phenanthrolin austitriert.

Das Divinylbenzol (DVB) stellt ein Gemisch des m- und p-Divinylbenzols dar und wurde in Form einer 64prozentigen Lösung in Hexan eingesetzt. Die Bestimmung des Umsatzes erfolgte, indem man den Feststoffgehalt nach Abdampfen des Lösemittels und der Monomeren bestimmte.

Die tan delta-Kurven wurden mit einem Torsionspendel nach Schmieder-Wolf gemäß DIN 53 520 aufgenommen. Die Bestimmung der Mikrostruktur erfolgte IR-spektroskopisch.

Als Kupplungsausbeute wird der Prozentanteil an Kautschuk angesehen, der nach der Umsetzung mit einem Kupplungsmittel eine sternförmige Struktur aufweist und sich gegenüber dem ungekuppelten Kautschuk durch ein erheblich höheres Molekulargewicht auszeichnet. Die Bestimmung erfolgt mit der GPC-Analyse, wobei Tetrahydrofuran als Lösemittel und Polystyrol als Säulenmaterial eingesetzt wird. Die Polymerisate werden mit einem Lichtstreuungsdetektor charakterisiert. Zu diesem Zweck werden dem Reaktor vor Zugabe des Kupplungsmittels und zu Ende der Reaktion Proben entnommen. Die Defo-Härte (DH) und die Defo-Elastizität (DE) wurden nach den üblichen Meßmethoden bestimmt (DIN 53 514).

Teile bedeuten Massenteile, Prozent (%) Massen-%.

Beispiel 1

In einem mit trockenem Stickstoff gespülten, ersten V2A-Rührautoklaven wurden 275 Teile Hexan, 65 Teile 1,3-Butadien und 0,03 Teile DVB vorgelegt und nach Trocknung über einem Molekularsieb (0,4 nm) unter thermoelektrischer Kontrolle mit n-Butyllithium (Buli) titriert. Die Polymerisation wurde bei 50 °C durch

Zugabe von 0,051 Teilen n-Butyllithium gestartet. Die Temperatur stieg trotz Kühlung kurzzeitig bis auf maximal 62 °C. Nach 107 Minuten, nachdem das vorgelegte 1,3-Butadien praktisch vollständig umgesetzt war, wurde eine IR-Probe entnommen und wie das Endprodukt aufgearbeitet.
Unmittelbar danach wurde innerhalb von 85 Sekunden der Inhalt eines zweiten V2A-Rührautoklaven (40 °C) zugegeben. Dieser enthielt eine mit n-Butyllithium titrierte Lösung von 5 Teilen 1,3-Butadien, 15 Teilen Isopren und 15 Teilen Styrol in 190 Teilen Hexan.

Unmittelbar danach wurden 1,0 Teile Ethylenglykoldimethylether zugegeben. Die Temperatur wurde konstant bei 50 °C gehalten. 4 Stunden nach dem Start wurde die Polymerisation durch Zugabe einer Lösung von 0,5 Teilen 2,2'-Methylen-bis-(4-methyl-6-tertiärbutylphenol) in 2 Teilen feuchtem Toluol gestoppt. Das Lösemittel wurde mit Wasserdampf abdestilliert und das Polymerisat 24 Stunden bei 70 °C im Umlufttrockenschrank getrocknet.

Beispiele 2 bis 7, Vergleichsbeispiele A und B

Die Reaktionsbedingungen sind, soweit sie nicht Beispiel 1 entsprechen, in Tabelle 1 und 2 angegeben.

Vergleichsbeispiel C

BUNA$^R$ EM 1712 ist ein üblicher Styrol-Butadien-Kautschuk, mit 37,5 Teilen Öl gestreckt, der von den Bunawerken Hüls GmbH hergestellt wird. Abweichend von der später angegebenen, allgemeinen Vulkanisationsmischung wurde der BUNA$^R$ EM 1712 in folgender Zusammensetzung vulkanisiert:
137,5 Teile BUNA$^R$ EM 1712
75 Teile Ruß N 339
3 Teile aromatisches Öl
3 Teile Zinkoxid
2 Teile Stearinsäure
1 Teil VULCANOX$^R$ 4010 NA
1 Teil VULCANOX$^R$ 4020
1 Teil KORESIN$^R$
1,5 Teile CBS
0,2 Teile DPG
2 Teile Schwefel

Die Zusammensetzung der Vulkanisationshilfsmittel ist weiter unten angegeben.

Tabelle 1

| | Beispiel 2 | Beispiel 3 | Beispiel 4 | Beispiel 5 |
|---|---|---|---|---|
| Vorlage | | | | |
| Teile Hexan | 275 | 275 | 235 | 345 |
| Teile Butadien | 65 | 60 | 40 | 70 |
| Teile Cokatalysator | 0,025**) | 0,075*) | - | - |
| Teile DVB | 0,03 | 0,03 | 0,02 | 0,03 |
| Start mit Teilen Buli | 0,055 | 0,051 | 0,046 | 0,052 |
| Start mit Block B nach x Minuten | 120 | 120 | 120 | 120 |
| durch Zugabe von | | | | |
| Teile Butadien | 10 | 13 | 19 | 10 |
| Teile Isopren | 15 | 16 | 24 | 15 |
| Teile Styrol | 10 | 11 | 17 | 5 |
| Teile Hexan | 190 | 190 | 250 | 125 |
| Teile DEE | 0,75 | 1,0*) | 0,75 | 1,0 |
| Ende der Polymerisation nach y-Stunden | 4 | 4 | 4 | 4 |

*) Ethylenglykolethyl-tert. butylether
**) DEE

Tabelle 2

| | Beispiel 6 | Beispiel 7 | Vergleichsbeispiel A | Vergleichsbeispiel B |
|---|---|---|---|---|
| Vorlage | | | | |
| Teile Hexan | 280 | 275 | 275 | 450 |
| Teile Butadien | 60 | 60 | 80 | 100 |
| Teile Cokatalysator | 0,025*) | - | 0,015**) | 0,075***) |
| Teile DVB | 0,03 | 0,03 | 0,03 | - |
| Start mit Teilen Buli | 0,056 | 0,050 | 0,062 | 0,031 |
| Start mit Block B nach x Minuten | 100 | 120 | 15 | 13 |
| durch Zugabe von | | | | |
| Teile Butadien | 7 | 13 | - | - |
| Teile Isopren | 22 | 16 | - | - |
| Teile Styrol | 11 | 11 | 20 | - |
| Teile Hexan | 190 | 190 | 190 | - |
| Teile DEE | 0,5*) | 0,75 | 0,5**) | 0,75 |
| Ende der Polymerisation nach y-Stunden | 3 | 4 | 1 | 2 |
| Das Vergleichsbeispiel A entspricht der DE-OS 35 30 438.<br>Das Vergleichsbeispiel B entspricht der GB-PS 2 090 840. | | | | |

*) DME
**) Diglyme
***) DEE

Abbildung 1 zeigt die Torsiogramme nach Schmieder-Wolf von vulkanisierten Probekörpern (hergestellt analog zur Vorschrift für SBR in der ISO 2322-1985 (E) Series A) mit den AB-Blockcopolymerisaten der Beispiele 1 und 2, sowie von Vergleichsbeispiel B. Es ist deutlich zu erkennen, daß die Torsiogramme der erfindungsgemäßen Beispiele 1 und 2 breiter sind als das Torsiogramm gemäß Vergleichsbeispiel B.

Die Abbildungen 2 und 3 zeigen weitere Torsiogramme der Beispiele 5, 6 und A bzw. 8, 9 und 10.

Tabelle 3

| Prozent-Anteil der Strukturelemente, die durch Polymerisation der folgenden Monomeren erhalten wurden | | | | | | |
|---|---|---|---|---|---|---|
| | Butadien | | | Isopren | | Styrol |
| | 1,4-trans | 1,2[1)] | 1,4-cis | 3,4- | 1,4- | |
| Bsp. 1 | 34 | 13 | 24 | 10 | 3 | 16 |
| Bsp. 2[2)] | 28 | 28 | 20 | 11 | 2 | 11 |
| Bsp. 3 | 21 | 38 | 14 | 11 | 3 | 13 |
| Bsp. 4 | 24 | 19 | 18 | 18 | 2 | 19 |
| Bsp. 5 | 37 | 16 | 29 | 13 | 1 | 6 |
| Bsp. 6 | 23 | 29 | 17 | 18 | < 1 | 13 |
| Bsp. 7[2)] | 31 | 18 | 23 | 13 | 2 | 13 |
| Bsp. A | 21 | 43 | 15 | 0 | 0 | 21 |
| Bsp. B | 23 | 65 | 12 | - | - | - |

1) einschließlich Isopren-1,2

2) Der Gehalt an Polystyrolblöcken beträgt 0,3 Prozent, bezogen auf das AB-Blockcopolymerisat.

Tabelle 4

| Zusammensetzung der AB-Blockcopolymerisate | | | | | |
|---|---|---|---|---|---|
| Beispiel | Block A | | Block B | | |
| | Butadieneinheiten (%) | Butadien-1,2-einheiten (%) | Butadien (%) | Isopren (%) | Styrol (%) |
| 1 | 65 | 12 | 5 | 15 | 15 |
| 2 | 65 | 30 | 10 | 15 | 10 |
| 3 | 60 | 46 | 13 | 16 | 11 |
| 4 | 40 | 14 | 19 | 24 | 17 |
| 5 | 70 | 11 | 10 | 15 | 5 |
| 6 | 60 | 39 | 7 | 22 | 11 |
| 7 | 60 | 12 | 13 | 16 | 11 |
| A | 30 | 31 | 50 | 0 | 20 |
| B | 50 | 47 | 50 | - | - |

Tabelle 5

| Charakterisierung der AB-Blockcopolymerisate | | | |
|---|---|---|---|
| Beispiel | Mooney-Viskosität | $D_H/D_E$ | Uneinheitlichkeit U |
| Bsp. 1 | 88 | 1850/43 | 1,45 |
| Bsp. 2 | 69 | 1175/35 | 1,27 |
| Bsp. 3 | 41 | 625/27 | 1,04 |
| Bsp. 4 | 69 | 1000/30 | 1,12 |
| Bsp. 5 | 64 | nicht bestimmt | 1,3 |
| Bsp. 6 | 48 | 700/30 | 0,83 |
| Bsp. 7 | 70 | 1000/30 | 1,12 |
| A | 42 | nicht bestimmt | nicht bestimmt |
| B | 51 | nicht bestimmt | nicht bestimmt |

Aus den erfindungsgemäßen AB-Blockcopolymerisaten wurden Vulkanisationsmischungen folgender Zusammensetzung hergestellt und einer eingehenden Prüfungen unterzogen:
100 Teile AB-Blockcopolymerisat
50 Teile Ruß N 339
8 Teile hocharomatisches Öl
3 Teile Zinkoxid
1 Teil Stearinsäure
1 Teil N-Isopropyl-N′-phenyl-p-phenylendiamin (VULKANOX$^R$ 4010 NA)
1 Teil N-(1,3-Dimethylbutyl)-N′-phenyl-p-phenylendiamin (VULKANOX$^R$ 4020)
2 Teile KORESIN$^R$ Umsetzungsprodukt von p-tert.Butylphenol mit Acetylen
0,6 Teile N-Cyclohexyl-1-benzothiazolsulfenamid (CBS, VULKAZIT$^R$ CZ)
0,3 Teile Diphenylguanidin (DPG, VULKAZIT$^R$ DZ)
0,6 Teile N,N′-Dimorpholyldisulfid (SULFASAN$^R$ R)
1,7 Teile Schwefel

Die Produkte VULKANOX$^R$ 4010 NA, VULKANOX$^R$ 4020, VULKAZIT$^R$ CZ und VULKAZIT$^R$ DZ sind bei der Bayer AG, Leverkusen, SULFASAN$^R$ R bei Monsanto und KORESIN$^R$ bei der BASF AG, Ludwigshafen, erhältlich.

Die erhaltenen physikalischen Werte sind der nachfolgenden Tabelle zu entnehmen.

Tabelle 6:

| Eigenschaften | Beispiel 1 | Beispiel 2 | Beispiel 3 | Beispiel 5 | Vergleichs-beispiel C |
|---|---|---|---|---|---|
| ML 10) Roh | 95 | 79 | 57 | 71 | |
| ML 10) Mischung | 99 | | | 93 | 57 |
| $t_{10}$ 11) min. | 9,9 | 9,4 | 10,0 | 9,8 | |
| $t_{90}$ 11) min. | 14,9 | 15,2 | 18,2 | 13,2 | |
| Zugfestigkeit in MPa 1) | 19,5 | 13,0 | 16,5 | 17,0 | 18,5 |
| Bruchdehnung in % 2) | 388 | 331 | 437 | 397 | 480 |
| Spannungswert 1) in MPa bei 100 % Dehnung | 3,4 | 2,3 | 2,1 | 2,4 | 1,8 |
| Spannungswert 1) in MPa bei 300 % Dehnung | 14,5 | 11,0 | 10,8 | 11,6 | 9,2 |
| Harte 3) (Shore A) bei 22 ° | 70 | 68 | 68 | 67 | 64 |
| Rückprallelastizitat 4) in % bei 22° | 21 | 16 | 14 | 41 | 29 |
| in % bei 75° | 56 | 56 | 55 | 61 | 45 |
| Abrieb 5) in mm³ | 100 | 98 | 150 | 70 | 140 |
| Weiterreißfestigkeit 6) bei 22 ° in MPa | | 16,7 | 13,8 | | 10,5 |
| bei 140 ° in MPa | | 4,9 | 5,4 | | 8,5 |
| Frank-Flexometer 7) | | 116 | 124 | | 109 |
| Kugelzermürbung nach Marten 8) 150 N | 88 | 87 | 96 | 78 | 103 |
| 200 N | 114 | 115 | 123 | 96 | 135 |
| 250 N | 136 | 136 | 153 | 125 | 176 |
| 300 N | 160 | 163 | 12' | 154 | 10' |
| 350 N | 9' | 3' | | 210 | |
| 400 N | | | | 9' | |

Tabelle 6: (Fortsetzung)

| Eigenschaften | Beispiel 1 | Beispiel 2 | Beispiel 3 | Beispiel 5 | Vergleichsbeispiel C |
|---|---|---|---|---|---|
| Bremswegmessung Asphalt/Beton bei 50 km/h[12] | | 100/100 | 105/110 | | 100/100 |
| Rollwiderstand[9] bei 50 km/h | | 106 | 106 | | 100 |
| bei 80 km/h | | 105 | 109 | | 100 |
| bei 110 km/h | | 105 | 108 | | 100 |

Erlauterungen zu Tabelle 6

1) gemaß DIN 53 504
2) gemaß DIN 53 504
3) gemäß DIN 53 505
4) gemäß DIN 53 512
5) gemaß DIN 53 516
6) gemäß DIN 53 507
7) gemaß DIN 53 533 Teil 2
8) gemäß S. Boström, Kautschuk-Handbuch 5. Band, Berliner Union, Stuttgart, S. 149, 150
9) gemessen auf Trommelprüfstand. Die Werte beziehen sich auf Vergleichsbeispiel C.
10) Mooney-Viskositat ($ML_{1+4}$, 100 °C, DIN 53 523)
11) Vulkametrie gemäß DIN 53 529
12) Die Werte beziehen sich auf Vergleichsbeispiel C.

Beispiel 8

In einem mit trocknem Stickstoff gespülten V2A-Rührautoklaven wurden 625 Teile Hexan und 70 Teile 1,3-Butadien vorgelegt. Dann wurde auf 50 °C erhitzt und mit einer 5 prozentigen Lösung von n-Butyllithium in Hexan unter thermoelektrischer Kontrolle titriert. Die Polymerisation wurde bei 50 °C durch Zugabe von 0,071 Teilen n-Butyllithium gestartet. Die Temperatur wurde durch Kühlung konstant gehalten. Nachdem 85 % des eingesetzten Butadiens umgesetzt waren, wurden bei 50 °C 15 Teile Isopren, 15 Teile Styrol und 1,1 Teile 1-Ethoxy-2-tert.-butoxy-ethan zudosiert. Nach 80 Minuten wurde eine Probe für die GPC-Analyse gezogen.

Danach wurden bei 50 °C 0,72 Teile DVB zugesetzt. Nach einer Stunde bei 50 °C wurde auf Raumtemperatur abgekühlt und 0,5 Teile 2,2'-Methylen-bis-(4-methyl-6-tert.-butylphenol) zugegeben. Der erhaltene Kautschuk wurde mit einem Gemisch aus Isopropanol und Methanol im Volumenverhältnis 80 : 20 gefällt und 24 Stunden bei 70 °C im Umlufttrockenschrank getrocknet.

Beispiel 9

Die Versuchsdurchführung entspricht Beispiel 8 mit der Ausnahme, daß anstelle von 0,72 Teilen nunmehr 2,17 Teile DVB zugesetzt werden.

Beispiel 10

In einem mit trocknem Stickstoff gespülten V2A-Rührautoklaven wurden 625 Teile Hexan und 70 Teile 1,3-Butadien vorgelegt. Dann wurde auf 50 °C erhitzt und mit einer 5 prozentigen Lösung von n-Butyllithium in Hexan unter thermoelektrischer Kontrolle titriert. Die Polymerisation wurde bei 50 °C durch Zugabe von 0,062 Teilen n-Butyllithium gestartet. Die Temperatur wurde durch Kühlung konstant gehalten. Nachdem 92 % des eingesetzten Butadiens umgesetzt waren, wurden bei 50 °C 15 Teile Isopren, 15 Teile Styrol und 1,1 Teile 1-Ethoxy-2-tert.-butoxy-ethan zudosiert. Nach 80 Minuten wurde ein Probe für die GPC-Analyse gezogen.

Danach wurden bei 50 °C 0,054 Teile 1,2,4-Tris-(2-trichlorsilylethyl)-cyclohexan zugesetzt. Nach einer Stunde bei 50 °C wurde auf Raumtemperatur abgekühlt und 0,5 Teile 2,2'-Methylen-bis-(4-methyl-6-tert.-butylphenol) zugegeben. Der erhaltene Kautschuk wurde mit einem Gemisch aus Isopropanol und Methanol im Volumenverhältnis 80 : 20 gefällt und 24 Stunden bei 70 °C im Umlufttrockenschrank getrocknet.

Tabelle 7

| Prozentanteil der Strukturelemente, die durch Polymerisation der folgenden Monomeren erhalten wurden. | | | | | | |
|---|---|---|---|---|---|---|
| | Butadien | | | Isopren | | Styrol |
| | 1,4-trans | 1,4-cis | 1,2 | 3,4- | 1,4- | |
| Bsp. 8 | 34 | 24 | 11 | 3 | 12 | 16 |
| Bsp. 9 | 34 | 23 | 11 | 4 | 12 | 16 |
| Bsp. 10 | 35 | 26 | 9 | 4 | 10 | 16 |

Tabelle 8

| Zusammensetzung der AB-Blockcopolymerisate | | | | | |
|---|---|---|---|---|---|
| Beispiel | Block A | | Block B | | |
| | Butadieneinheiten (%) | Butadien-1,2-einheiten*) (%) | Butadien (%) | Isopren (%) | Styrol (%) |
| 8 | 60 | 10 | 10 | 15 | 15 |
| 9 | 60 | 10 | 10 | 15 | 15 |
| 10 | 65 | 10 | 5 | 15 | 15 |

*) Anteil von 1,2-Einheiten in Block A (gemessen durch IR Spektroskopie)

Tabelle 9

| Charakterisierung der AB-Blockcopolymerisate | | | | | |
|---|---|---|---|---|---|
| Beispiel | Mooney-Viskosität | $D_H/D_E$ | Makrostruktur | | |
| | | | U | Z[1)] | K %[2)] |
| 8 | - | - | 2,4 | 7 | 80 |
| 9 | - | - | 2,6 | 10 | 75 |
| 10 | - | - | 1,3 | 7,5 | 70 |

1) Z = Zähligkeit, Zahl der Arme
2) K = Kupplungsausbeute

## Patentansprüche

1. Ungesättigte, elastomere AB-Blockcopolymerisate auf Basis von
   45 bis 85 Masse-% Butadien-1,3,
   5 bis 40 Masse-% Isopren und
   bis 30 Masse-% Styrol,
   bestehend aus
   40 bis 80 Masse-% eines Blockes A, der Butadieneinheiten mit einem Gehalt an gleichmäßig verteilten Vinylgruppen von 8 bis 60 Masse-% enthält,
   60 bis 20 Masse-% eines Blockes B, der
   - 0 bis 60 Masse-% Butadien-1,3,
   - mindestens 10 Masse-% Isopren und
   - 5 bis 45 Masse-% Styrol

   enthält, wobei die Dieneinheiten einen Vinylgehalt von 75 bis 90 Masse-% aufweisen.

2. AB-Blockcopolymerisate gemäß Anspruch 1,
   dadurch gekennzeichnet,
   daß bis zu 25 Masse-% der Butadien-1,4-Einheiten des Blockes A durch Styrol ersetzt sind.

3. AB-Blockcopolymerisate gemäß Anspruch 1,
   dadurch gekennzeichnet,
   daß bis zu 30 Masse-% der Butadien-1,4-Einheiten des Blockes A durch Isopreneinheiten mit mindestens 60 Masse-% 1,4-Anteil ersetzt sind.

4. AB-Blockcopolymerisate gemäß Anspruch 1,
   dadurch gekennzeichnet,
   daß das Blockcopolymerisat
   50 bis 75 Masse-% Butadien-1,3,
   10 bis 35 Masse-% Isopren und
   5 bis 25 Masse-% Styrol
   enthält.

5. AB-Blockcopolymerisate gemäß den Ansprüchen 1 bis 4,
   dadurch gekennzeichnet,
   daß der Anteil der Vinylgruppen im Block A 10 bis 50 Masse-% beträgt.

6. AB-Blockcopolymerisate gemäß den Ansprüchen 1 bis 5,
   dadurch gekennzeichnet,
   daß die Blockcopolymerisate mit Verzweigungs- oder Kupplungsmitteln verzweigt sind.

7. Verfahren zur Herstellung der AB-Blockcopolymerisate gemäß den Ansprüchen 1 bis 6 durch anionische Polymerisation der Monomeren in einem inerten organischen Lösemittel in Gegenwart einer Li-organischen Verbindung, dadurch gekennzeichnet, daß man

a) zunächst einen Block A herstellt, indem man Butadien und gegebenenfalls Styrol oder Isopren, gegebenenfalls in Gegenwart eines Cokatalysators, polymerisiert und
b) dann einen Block B herstellt, indem man ein Gemisch aus Butadien, Isopren und Styrol in Gegenwart eines Cokatalysators polymerisiert.

**8.** Verfahren nach Anspruch 7, dadurch gekennzeichnet, daß man bereits zu Beginn der Polymerisation des Blockes A die gesamte Menge Butadien vorlegt.

**9.** Verfahren nach Anspruch 8, dadurch gekennzeichnet, daß man bereits zu Beginn der Polymerisation des Blockes A die gesamte Menge Butadien und Styrol vorlegt.

**10.** Verfahren nach den Ansprüchen 7 bis 9, dadurch gekennzeichnet, daß man als Katalysator eine monofunktionelle Li-organische Verbindung einsetzt.

**11.** Verfahren nach den Ansprüchen 7 bis 10, dadurch gekennzeichnet, daß man als Cokatalysatoren Glykolether der Formel $R_1(O\text{-}CH_2\text{-}CH_2)_n\text{-}O\text{-}R_2$ einsetzt, wobei n = 1 oder 2 und $R_1$ und $R_2$ jeweils für einen Alkylrest mit 1 bis 4 C-Atomen stehen.

**12.** Verfahren nach den Ansprüchen 7 bis 11, dadurch gekennzeichnet, daß man die nach vollständiger Polymerisation erhaltenen Polymeren mit einen Kupplungsmittel umsetzt.

**13.** Verfahren nach den Ansprüchen 7 bis 11, dadurch gekennzeichnet, daß man wenigstens einen der Verfahrensschritte der Polymerisation in Gegenwart von Divinylbenzol durchführt.

**14.** Verwendung der AB-Blockcopolymerisate gemäß den Ansprüchen 1 bis 6 zur Herstellung der Laufflächen von Reifen.

## Claims

**1.** An unsaturated, elastomeric AB block copolymer based on
45 to 85% by weight of 1,3-butadiene,
5 to 40% by weight of isoprene and
up to 30% by weight of styrene,
composed of
40 to 80% by weight of a block A which contains butadiene units having a content of 8 to 60% by weight of uniformly distributed vinyl groups,
60 to 20% by weight of a block B which contains
- 0 to 60% by weight of 1,3-butadiene,
- at least 10% by weight of isoprene and
- 5 to 45% by weight of styrene,

the diene units having a vinyl content of 75 to 90% by weight.

**2.** An AB block copolymer according to claim 1, characterised in that up to 25% by weight of the 1,4-butadiene units of block A are replaced with styrene.

**3.** An AB block copolymer according to claim 1, characterised in that up to 30% by weight of the 1,4-butadiene units of the block A are replaced with isoprene units having a 1,4 content of at least 60% by weight.

4. An AB block copolymer according to claim 1, characterised in that the block copolymer contains 50 to 75% by weight of 1,3-butadiene,
10 to 35% by weight of isoprene and
5 to 25% by weight of styrene.

5. An AB block copolymer according to any of claims 1 to 4, characterised in that the amount of vinyl groups in block A is 10 to 50% by weight.

6. An AB block copolymer according to any of claims 1 to 5, characterised in that the block copolymer is branched with a branching or coupling agent.

7. A process for the preparation of the AB block copolymer according to any of claims 1 to 6 by anionic polymerisation of the monomers in an inert organic solvent in the presence of an organolithium compound, characterised in that
   a) first a block A is prepared by polymerising butadiene and optionally styrene or isoprene, optionally in the presence of a cocatalyst, and
   b) then a block B is prepared by polymerising a mixture of butadiene, isoprene and styrene in the presence of a cocatalyst.

8. A process according to claim 7, characterised in that the total amount of butadiene is introduced at the beginning of the polymerisation of block A.

9. A process according to claim 8, characterised in that the total amount of butadiene and styrene are introduced at the beginning of the polymerisation of block A.

10. A process according to any of claims 7 to 9, characterised in that the catalyst used is a monofunctional organolithium compound.

11. A process according to any of claims 7 to 10, characterised in that a glycol ether of the formula $R_1(O-CH_2-CH_2)_n-O-R_2$, in which n = 1 or 2 and $R_1$ and $R_2$ are each an alkyl radical of 1 to 4 C atoms, is used as cocatalyst.

12. A process according to any of claims 7 to 11, characterised in that the polymer obtained after complete polymerisation is reacted with a coupling agent.

13. A process according to any of claims 7 to 11, characterised in that at least one of the process steps of the polymerisation is carried out in the presence of divinylbenzene.

14. Use of the AB block copolymer according to any of claims 1 to 6 for the production of tyre treads.

**Revendications**

1. Produits de copolymérisation en bloc du type AB, insaturés et élastomères, à base de

   45 à 85 % en masse de butadiène-(1,3),
   5 à 40 % en masse d'isoprène et
   jusqu'à 30 % en masse de styrène,

   composés

   de 40 à 80 % en masse d'un bloc A qui contient des unités butadiène avec une teneur de 8 à 60 % en masse de groupes vinyle uniformément répartis,

   de 60 à 20 % en masse d'un bloc B qui contient

- de zéro à 60 % en masse de butadiène-(1,3),
- au moins 10 % en masse d'isoprène et,
- de 5 à 45 % en masse de styrène, les unités diène présentant une teneur en vinyle de 75 à 90 % en masse.

**2.** Produits de copolymérisation en bloc du type AB suivant la revendication 1,
caractérisés par le fait qu'une fraction allant jusqu'à 25 % en masse des unités butadiène-(1,4) dans la masse A est remplacée par du styrène.

**3.** Produits de copolymérisation en bloc du type AB suivant la revendication 1,
caractérisés par le fait qu'une fraction allant jusqu'à 30 % en masse des unités butadiène-(1,4) dans la masse A est remplacée par des unités d'isoprène avec une fraction -(1,4) d'au moins 60 % en masse.

**4.** Produits de copolymérisation en bloc du type AB suivant la revendication 1,
caractérisés par le fait que le produit de copolymérisation en bloc contient :
de 50 à 75 % en masse de butadiène-(1,3),
de 10 à 35 % en masse d'isoprène, et
de 5 à 25 % en masse de styrène.

**5.** Produits de copolymérisation en bloc du type AB suivant les revendications 1 à 4,
caractérisés par le fait que la fraction des groupes vinyle est de 10 à 50 % en masse dans le bloc A.

**6.** Produits de copolymérisation en bloc du type AB suivant les revendications 1 à 5,
caractérisés par le fait que les produits de copolymérisation en bloc sont ramifiés avec des agents de ramification ou de copulation.

**7.** Procédé pour fabriquer les produits de copolymérisation en bloc du type AB suivant les revendications 1 à 6, par polymérisation anionique des monomères dans un solvant organique inerte en présence d'un composé organique du lithium,
caractérisé par le fait que

a) on fabrique tout d'abord un bloc A en polymérisant, le cas échéant en présence d'un co-catalyseur, du butadiène et éventuellement du styrène ou de l'isoprène,
b) on prépare ensuite un bloc B en polymérisant un mélange de butadiène, d'isoprène et de styrène en présence d'un co-catalyseur.

**8.** Procédé suivant la revendication 7,
caractérisé par le fait qu'on met en place dès le début de la polymérisation du bloc A la totalité de la quantité de butadiène.

**9.** Procédé suivant la revendication 8,
caractérisé par le fait qu'on met en place dès le début de la polymérisation du bloc A la totalité de la quantité de butadiène et de styrène.

**10.** Procédé suivant les revendications 7 à 9,
caractérisé par le fait que l'on utilise, comme catalyseur un composé organique monofonctionnel du lithium.

**11.** Procédé suivant les revendications 7 à 10,
caractérisé par le fait que l'on utilise, comme cocatalyseurs, des éthers du glycol répondant à la formule

$$R_1(O\text{-}CH_2\text{-}CH_2)_n\text{-}O\text{-}R_2$$

où $n = 1$ ou 2, $R_1$ et $R_2$ sont chacun un radical alkyle comportant de 1 à 4 atomes de carbone.

**12.** Procédé suivant les revendications 7 à 11,
caractérisé par le fait qu'on fait réagir sur un agent de copulation les polymères obtenus après

polymérisation complète.

**13.** Procédé suivant les revendications 7 à 11, caractérisé par le fait qu'on exécute au moins l'une des phases opératoires de la polymérisation en présence de divinyle-benzène.

**14.** Utilisation des produits de copolymérisation en bloc du type AB suivant les revendications 1 à 6 pour la fabrication des bandes de roulement de pneumatiques.

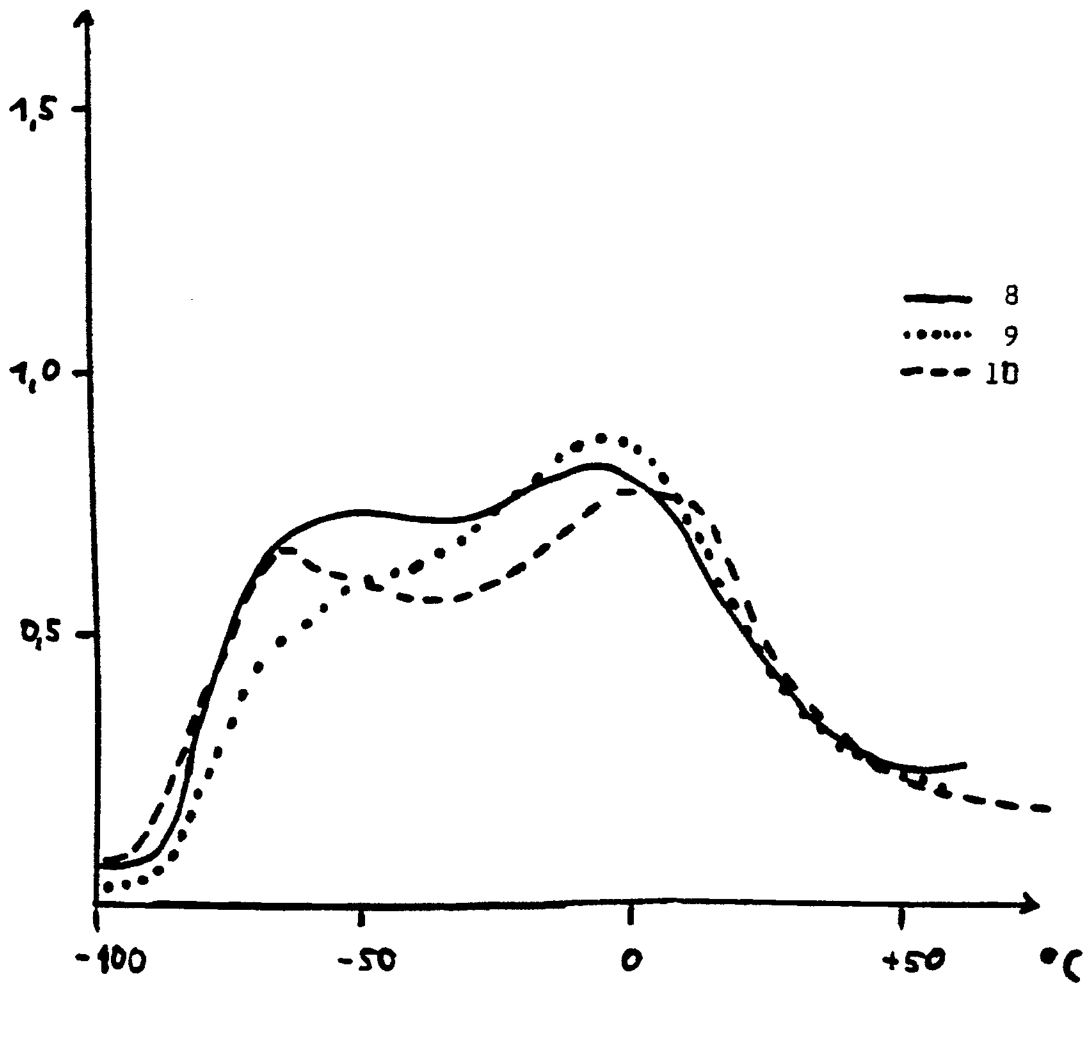
1,5
1,0
0,5
-100
-50
0
+50
°C
8
9
10

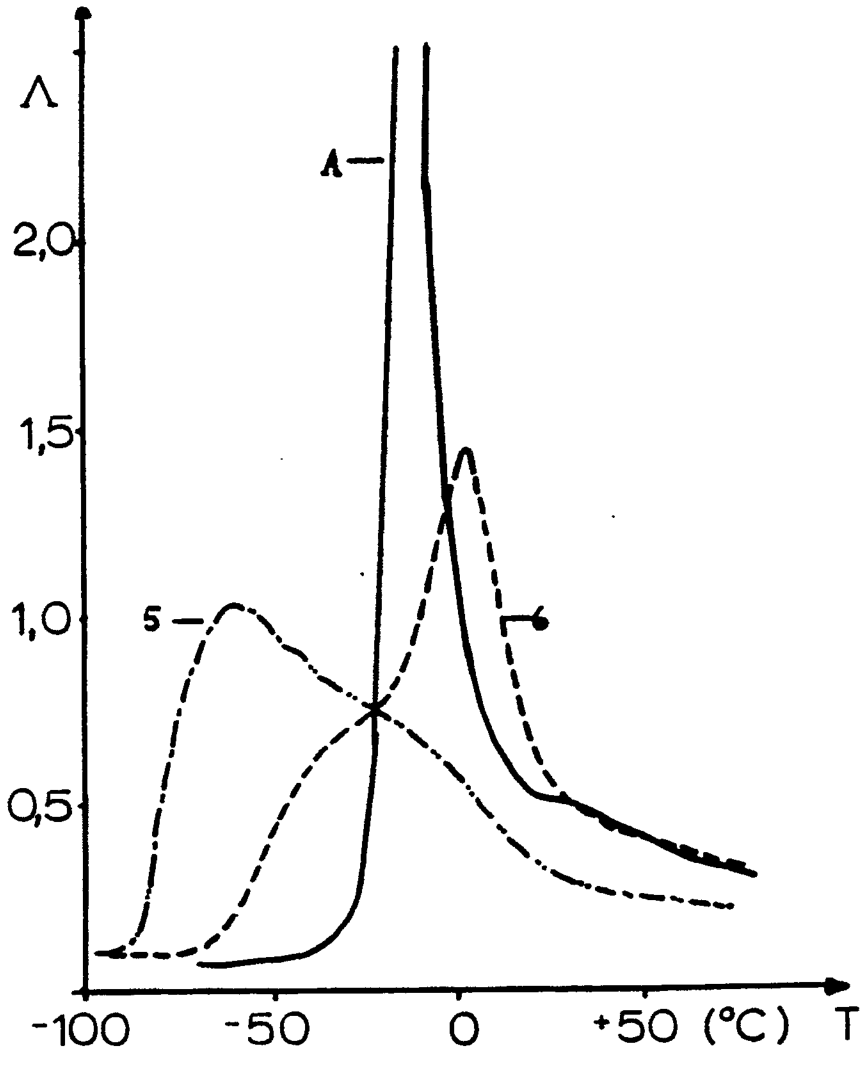
Λ
2,0
1,5
1,0
0,5
1
5
6
-100
-50
0
+50 (°C)
T

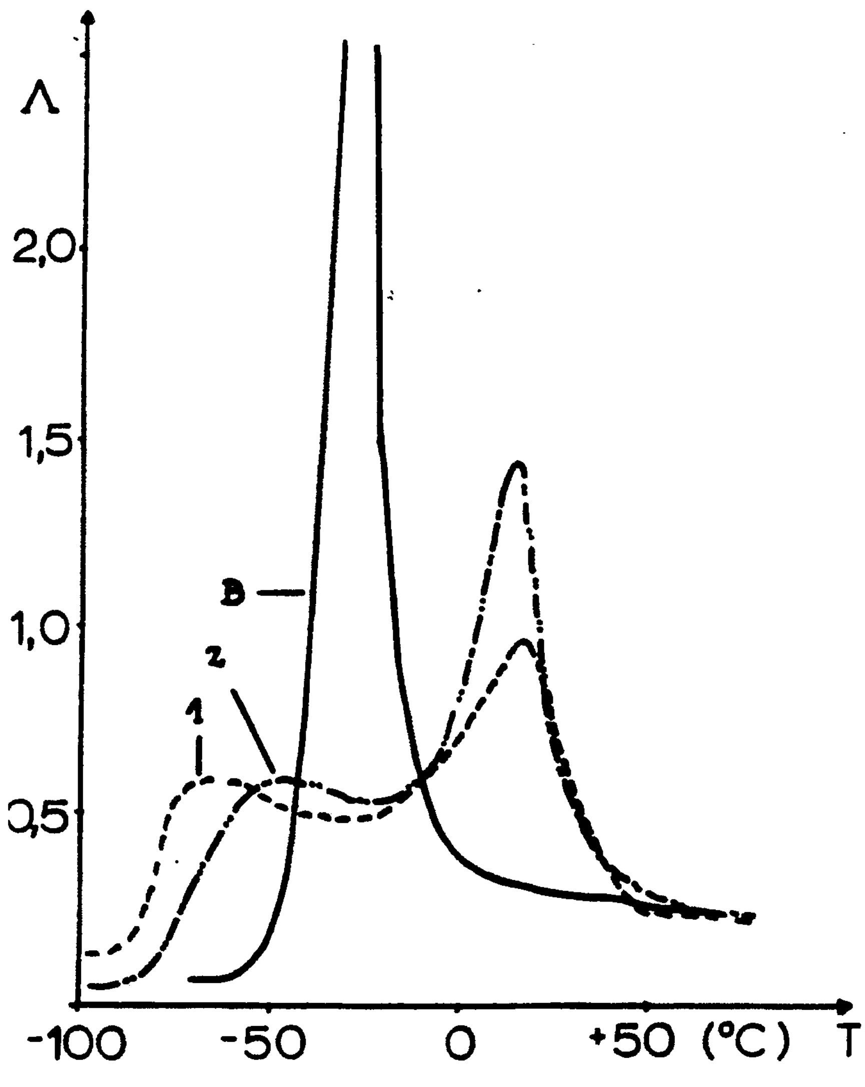
Λ
2,0
1,5
1,0
0,5
B
2
1
-100
-50
0
+50 (°C)
T